# EUROPÄISCHE PATENTSCHRIFT

(11) **EP 2 366 932 B1**
(45) Veröffentlichungstag und Bekanntmachung des Hinweises auf die Patenterteilung: **28.06.2017**
(21) Anmeldenummer: 10405055.4
(22) Anmeldetag: 17.03.2010
(51) Int. Cl.: F16L 37/084, F16L 37/091

(54) **Steckmuffe und Verbindung zwischen einer Steckmuffe und einem Rohr**
Connecting sleeve and connection between a connecting sleeve and a tube
Raccord par mandrinage et connexion entre un raccord par mandrinage et un tuyau

(43) Veröffentlichungstag der Anmeldung: 21.09.2011
(73) Patentinhaber: Geberit International AG, 8645 Jona (CH)
(72) Erfinder: Allemann, Rudolf, 8722 Kaltbrunn (CH)
(74) Vertreter: Frischknecht, Harry Ralph

(56) Entgegenhaltungen:
- WO-A1-2009/017587
- DE-A1- 10 162 658
- GB-A- 2 160 279
- US-A1- 2006 265 852
- US-E- R E36 630

## Beschreibung

Die Erfindung betrifft eine Steckmuffe nach dem Oberbegriff des Anspruchs 1.

Solche Steckmuffen sind in der Sanitärtechnik in zahlreichen Ausführungen im Gebrauch. Sie ermöglichen es, ein Rohr mit einem zweiten Rohr oder einem Sanitärartikel zu verbinden. Das Verbinden erfolgt in einfacher Weise, indem das Rohr mit dem anzuschliessenden Ende in die Öffnung der Steckmuffe eingeschoben wird. Die Verbindung kann lösbar oder unlösbar sein. Wesentlich ist, dass in der Steckmuffe das eingeschobene Rohr einerseits sicher fixiert und andererseits gegenüber dem Muffengehäuse abgedichtet ist. Beide Funktionen sollen nach dem Einsetzen des Rohres in die Steckmuffe ohne weitere Massnahmen gewährleistet sein. Zudem sollte der Querschnitt des Rohres bzw. der Leitung durch die Steckmuffe nicht eingeschränkt werden. Die Steckmuffe soll somit lediglich an der Aussenseite, nicht aber in das Rohr eingreifen.

Eine Steckmuffe der genannten Art ist im Stand der Technik durch die DE-A-101 62 658 bekannt geworden.

Die WO 2009/051431 offenbart eine weitere Steckmuffe. Der Krallring besteht hier aus einer Mehrzahl von Zähnen, die in einem hülsenförmigen Träger gelagert sind. Dieser Träger wird mit dem Muffengehäuse gekoppelt, indem er gegen die rückwirkende Kraft einer in der Muffenöffnung angeordneten Spiralfeder bis zu einem Anschlag in das Muffengehäuse eingeschoben wird. Die Zähne gleiten hierbei über eine konische Fläche an der Innenseite des Muffengehäuses entlang. Die Spiralfeder ist zwischen zwei Dichtungsringen und dem Krallring angeordnet.

Der Erfindung liegt die Aufgabe zugrunde, eine Steckmuffe der genannten Art zu schaffen, die einfacher hergestellt werden kann und dennoch funktionssicher ist.

Die Aufgabe ist bei einer gattungsgemässen Steckmuffe gemäss Anspruch 1 gelöst. Bei der Herstellung der erfindungsgemässen Steckmuffe können somit der Dichtungsring und der Krallring als Einheit vormontiert und als solche in die genannte Öffnung eingesetzt werden. Der Dichtungsring und der Krallring bilden somit eine Baugruppe, die direkt in das Gehäuse der Steckmuffe eingesetzt werden kann.

Nach einer Weiterbildung der Erfindung ist vorgesehen, dass zwischen dem Krallring und dem Dichtungsring ein Haltring angeordnet ist, der den Dichtungsring mit dem Krallring verbindet. Diese drei Ringe bilden somit eine Baueinheit, die in die Öffnung des Gehäuses eingesetzt werden kann.

Die Herstellung ist dann besonders einfach, wenn gemäss einer Weiterbildung der Erfindung der Dichtungsring, der Haltering und der Krallring zusammengesteckt sind. Der Dichtungsring, der Haltering und der Krallring können somit separat hergestellt werden und durch Zusammenstecken werden diese zur genannten Einheit verbunden.

Nach einer Weiterbildung der Erfindung ist vorgesehen, dass der Dichtungsring, der Haltering und der Krallring jeweils mit Rastmitteln miteinander verbunden sind. Dies ermöglicht ein besonders einfaches Verbinden der genannten Ringe zur genannten Baueinheit.

Nach der Erfindung ist vorgesehen, dass der Krallring axial begrenzt verschiebbar am Haltering gelagert ist. Beim Einschieben des Rohres kann dann der Krallring axial zum Haltering hin bewegt werden. Die Krallelemente werden dann entsprechend verschoben und in eine Nut an der Innenseite des Gehäuses geschoben. Ist das Rohr vollständig in das Gehäuse eingesetzt, so sind die Krallelemente in dieser Nut fixiert. Da die Krallelemente an der Aussenseite des Rohres in dieses eingehakt sind, kann das Rohr nicht mehr aus dem Gehäuse der Steckmuffe herausgezogen werden.

Die Herstellung des Krallringes ist dann besonders einfach, wenn gemäss einer Weiterbildung der Erfindung der Krallring an seinem Umfang eine Mehrzahl von Segmenten aufweist, zwischen denen jeweils ein Krallelement gelagert ist. Hierbei ist hier insbesondere vorgesehen, dass jeweils zwei benachbarte Segmente mit einem Steg miteinander verbunden sind und dass die Krallelemente jeweils an einem dieser Stege gelagert sind. Die Krallelemente sind insbesondere schwenkbar am Krallring bzw. jeweils an einem Steg gelagert. Beim Einschieben des Rohres in das Gehäuse der Steckmuffe werden diese Krallelemente verschwenkt und dadurch am Gehäuse verankert. Die Krällelemente können besonders einfach und sicher am Krallring befestigt werden, indem diese aufgesteckt sind. Diese Krallelemente sind insbesondere auf die genannten Stege aufgesteckt. Vorzugsweise sind sie von der Innenseite her radial auf diese Stege aufgesetzt. Solche Krallelemente können beispielsweise besonders einfach durch Stanzen aus Blech hergestellt werden.

Nach einer Weiterbildung der Erfindung ist vorgesehen, dass der Dichtungsring Rastnocken aufweist, mit denen er mit dem Haltering verbunden ist. Diese Rastnocken ermöglichen ein besonders einfaches und sicheres Verbinden des Dichtungsringes mit dem Haltering. Die Rastnocken sind vorzugsweise am Dichtungsring angeformt und aus gummielastischem Material hergestellt.

Nach einer Weiterbildung der Erfindung ist vorgesehen, dass die Rastnocken axiale Federelemente für den Krallring bilden. Die Rastnocken sind hierbei vorzugsweise so ausgebildet, dass sie in den Haltering eingreifen. Ein ringförmiger Träger des Krallrings greift vorzugsweise ebenfalls in den Haltering ein und kann gegen die genannten Rastnocken verspannt werden. Beim Einschieben des Rohres in das Gehäuse wird dann der Krallring gegen den Dichtungsring verspannt. Ein separates Federelement, beispielsweise eine Spiralfeder kann dadurch vermieden werden. Die genannte Einheit kann in diesem Fall dann besonders kompakt und mit wenigen Einzelteilen hergestellt werden.

Nach einer Weiterbildung der Erfindung ist vorgesehen, dass die genannte Einheit mit einem ringförmigen Halteelement lösbar in der genannten Öffnung gehalten ist. Das Halteelement ist hierbei beispielsweise in eine Nut des Gehäuses eingerastet. Der Haltering ist lösbar, so dass die Einheit ausgebaut werden kann.

Die Erfindung betrifft zudem eine Verbindung zwischen einer Steckmuffe und einem Rohr. Hierbei ist vorgesehen, dass das in die Steckmuffe eingesetzte Rohr in Einschubrichtung gesehen zuerst den Krallring und dann den Dichtungsring durchgreift. Weist die Einheit zudem einen Haltering auf, so durchgreift das Rohr in Einschubrichtung gesehen zuerst den Krallring, dann den Haltering und schliesslich den Dichtungsring. Der Dichtungsring und die Dichtungsmittel sind hierbei vorzugsweise in Axialrichtung gegeneinander verspannt. Die Verspannung wird durch die genannten Rastnocken des Dichtungsringes aufrechterhalten.

Weitere vorteilhafte Merkmale ergeben sich aus den abhängigen Patentansprüchen, der nachfolgenden Beschreibung sowie der Zeichnung.

Ein Ausführungsbeispiel wird nachfolgend anhand der Zeichnung näher erläutert. Es zeigen:
- Fig. 1: eine räumliche Ansicht der Einheit,
- Fig. 2: die Einheit gemäss Fig. 1, wobei die Einzelteile aus zeichnerischen Gründen auseinandergezogen sind,
- Fig. 3: ein Schnitt durch eine erfindungsgemässe Steckmuffe mit einem eingesetzten Rohr,
- Fig. 4: ein weiterer axialer Schnitt durch die erfindungsgemässe Steckmuffe und das eingeschobene Rohr,
- Fig. 5: ein Schnitt durch die erfindungsgemässe Steckmuffe wobei das Rohr noch nicht eingesetzt ist und
- Fig. 6: ein weiterer axialer Schnitt durch die erfindungsgemässe Steckmuffe.

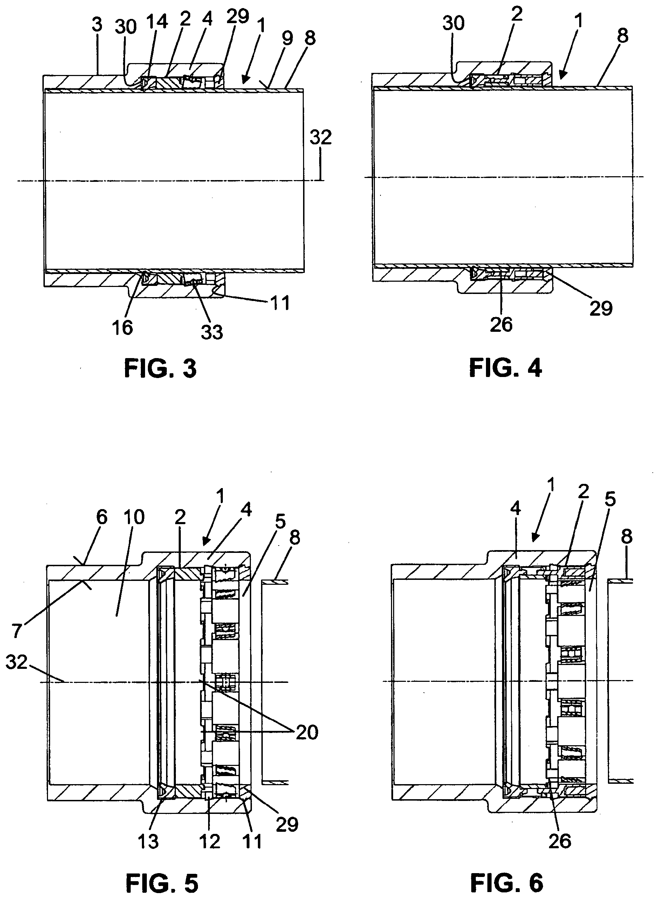

Die Steckmuffe 1 weist gemäss den Figuren 3 bis 6 ein Gehäuse 3 auf, das hülsenförmig ausgebildet ist und einen Durchgang 10 aufweist. An wenigstens einem Ende des Gehäuses 3 ist ein Aufnahmestutzen 4 angeordnet, der eine Öffnung 5 bildet, in welche ein Rohr 8 einsetzbar ist. Der Aufnahmestutzen 4 besitzt einen Aussendurchmesser, der etwas grösser ist als der Aussendurchmesser des Gehäuses 3 an einer Aussenseite 6. Der Innendurchmesser des Aufnahmestutzens 4 ist hingegen etwas grösser als der Durchmesser einer Innenseite 7. In den Aufnahmestutzen 4 ist ein Einsatz 2 eingesetzt, der innenseitig im Wesentlichen mit der genannten Innenseite 7 fluchtet. Dieser Einsatz 2 ist im Aufnahmestutzen 4 mit einem Halteelement 29 gehalten, das in eine Nut 11 des Aufnahmestutzens 4 eingerastet ist. Eine Schulter 30 an der Innenseite des Aufnahmestutzens 4 bildet einen axialen Anschlag für den Einsatz 2. Das Halteelement 29 könnte auch als Überwurfmutter ausgebildet sein, die auf den Aufnahmestutzen 4 aufgeschraubt ist.

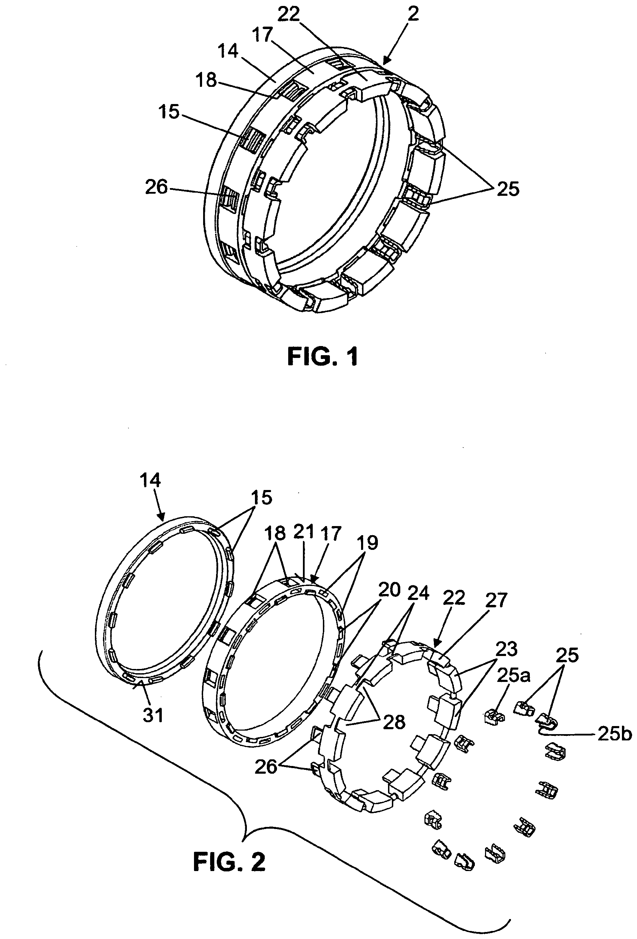

Wie die Figuren 1 und 2 zeigen, besteht der Einsatz 2 aus einem Dichtungsring 14, einem Haltering 17 sowie einem Krallring 22. Diese drei Ringe sind miteinander verbunden und bilden eine Baueinheit. Der Dichtungsring 14 greift in eine Nut 13 an der Innenseite des Aufnahmestutzens 4 ein. Bei der Herstellung der Steckmuffe 1 wird diese Baueinheit 2 in die Öffnung des Aufnahmestutzens 4 eingesetzt und schliesslich mit dem Halteelement 29 gesichert. Um den Dichtungsring 14 mit dem Haltering 17 zu verbinden, besitzt der Dichtungsring 14 an einer ringförmigen Innenseite 31 eine Mehrzahl von axial vorstehenden Rastnocken 15. Im verbundenen Zustand greifen diese Rastnocken 15 jeweils in eine Öffnung 19 des Halteringes 17 ein. Diese Öffnungen 19 erstrecken sich jeweils in axialer Richtung durch den Haltering 17 hindurch. Die Öffnungen 19 sind somit an der in Fig. 2 nicht gezeigten hinteren Seite offen. Die Rastnocken 15 sind wie der übrige Bereich des Dichtungsringes 14 aus einem gummielastischen Material hergestellt. Um den Dichtungsring 14 mit dem Haltering 17 zu verbinden, müssen diese beiden Teile somit lediglich zusammengesteckt werden. Die Rastnocken 15 greifen dann jeweils rastend in eine der Öffnungen 19 ein. Die Öffnungen 19 sind jeweils aussenseitig mit den Ausnehmungen 18 verbunden.

Der Haltering 17 ist ebenfalls mit dem Krallring 22 verrastet. Hierzu besitzt ein ringförmiger Träger 27 des Krallringes 22 eine Mehrzahl sich axial erstreckender Zungen 26, die jeweils in eine der Öffnungen 19 eingerastet sind. In die Öffnungen 19 greift somit von der einen Seite ein Rastnocken 15 und von der anderen Seite eine Zunge 26 ein. Der Haltering 17 und der Krallring 22 können somit ebenfalls durch einfaches Zusammenstecken miteinander verbunden werden.

Der Krallring 22 ist mit dem Haltering 17 so verbunden, dass sich diese in axialer Richtung begrenzt gegeneinander verschiebbar sind. Der entsprechende Weg ist durch die Länge der Zungen 26 bestimmt und beträgt in der Regel wenige Millimeter. Wie die Fig. 1 zeigt, liegen in den Ausnehmungen 18 jeweils ein Rastnocken 15 und eine Zunge 26 gegenüber. Wird der Krallring 22 in der in Fig. 1 gezeigten Position axial gegen den Haltering 17 hin bewegt, so werden die gummielastischen Rastnocken 15 durch die Zungen 26 in axialer Richtung gespannt.

Der Träger 27 des Krallringes 22 besitzt eine Mehrzahl von Segmenten 23, die jeweils über Stege 24 miteinander verbunden sind. Die Stege 24 überbrücken jeweils eine Lücke 28 des Trägers 27, wie insbesondere die Fig. 2 zeigt. Der Krallring 22 besitzt Krallelemente 25, die jeweils an einem der Stege 24 schwenkbar gelagert sind. Hierzu besitzen die Krallelemente 25 jeweils eine Ausnehmung 25a, in die jeweils ein Steg 24 eingreift. Die Krallelemente 25 können beispielsweise auf die Stege 24 aufgerastet sein. Wie ersichtlich, sind die Krallelemente 25 von der Innenseite her in die Lücken 28 eingesetzt. Die Krallelemente 25 besitzen zudem innenseitig jeweils zwei Zahnungen 25b. Diese Zahnungen 25b verlaufen jeweils gemäss den Figuren 5 und 6 geneigt zur Achse 32 des Gehäuses 3. Die Krallelemente 25 besitzen jeweils eine Schwenkachse 33 (Fig. 3), die im entsprechenden Steg 24, in Umfangsrichtung des Krallringes 22 verläuft und die wie ersichtlich zu den entsprechenden Zahnungen 25b einen Abstand besitzt. Die Achsen 33 sind wie ersichtlich vergleichsweise radial weit aussen innerhalb des Aufnahmestutzens 4 angeordnet.

Um das Rohr 8 mit der Steckmuffe 1 zu verbinden, wird dieses gemäss den Figuren 5 und 6 in Richtung der Achse 32 in die Öffnung 5 eingeschoben. Das Rohr 8 durchgreift zunächst das Halteelement 29 und hierauf den Krallring 22. Das Rohr 8 kommt hierbei mit seiner Aussenseite 9 in Eingriff mit den Zahnungen 25b der Krallelemente 25. Diese sind wie bereits oben erwähnt bezüglich der Achse 32 geneigt. Durch diesen Eingriff wird auf den Krallring 22 eine axiale Kraft ausgeübt. Der Krallring 22 wird hierdurch gegen den Haltering 17 hin bewegt. Hierbei drücken die Zungen 26 gegen die gummielastischen Rastnocken 15. Der Krallring 22 erfährt somit durch diese Bewegung eine rückwirkende Kraft durch die gummielastischen Rastnocken 15. Etwa gleichzeitig mit dieser Bewegung werden die Krallelemente 25 jeweils um die Schwenkachse 33 verschwenkt, so dass diese Krallelemente 25 jeweils gemäss Fig. 3 in die Nut 12 eingreifen. Das Rohr 8 durchgreift schliesslich auch den Dichtungsring 14, der mit einer Dichtungslippe 16 an der Aussenseite 9 des Rohres 8 elastisch anliegt. Die Bewegung des Rohres 8 kann durch einen hier nicht gezeigten Anschlag begrenzt sein. Durch die Spannung der gummielastischen Rastnocken 15 werden die Krallelemente 25 mit den Zahnungen 25b an die Aussenseite 9 des Rohres 8 angepresst. Die Zahnungen 25b graben sich in die Aussenseite 9 des Rohres 8 ein und fixieren dadurch das Rohr 8 in der Steckmuffe 1. Ein herausziehen des Rohres 8 aus der Steckmuffe 1 ist nicht mehr möglich. Die Verbindung ist grundsätzlich nicht lösbar. Das Rohr 8 ist insbesondere ein Metallrohr. Es sind hier aber auch Rohre aus anderen Materialien und auch Verbundrohre denkbar.

**BEZUGSZEICHENLISTE**

| | | | |
|---|---|---|---|
| 1 | Steckmuffe | 29 | Halteelement |
| 2 | Einsatz | 30 | Schulter |
| 3 | Gehäuse | 31 | Innenseite |
| 4 | Aufnahmestutzen | 32 | Achse |
| 5 | Öffnung | 33 | Schwenkachse |
| 6 | Aussenseite | | |
| 7 | Innenseite | | |
| 8 | Rohr | | |
| 9 | Aussenseite | | |
| 10 | Durchgang | | |
| 11 | Nut | | |
| 12 | Nut | | |
| 13 | Nut | | |
| 14 | Dichtungsring | | |
| 15 | Rastnocken | | |
| 16 | Dichtungslippe | | |
| 17 | Haltering | | |
| 18 | Ausnehmung | | |
| 19 | Öffnung | | |
| 20 | Vorsprung | | |
| 21 | Aussenseite | | |
| 22 | Krallring | | |
| 23 | Segment | | |
| 24 | Steg | | |
| 25 | Krallelement | | |
| 25a | Ausnehmung | | |
| 25b | Zahnung | | |
| 26 | Zunge | | |
| 27 | Träger | | |
| 28 | Lücke | | |

## Patentansprüche

1. Steckmuffe mit einem Gehäuse (3), das an wenigstens einem Ende eine Öffnung (5) aufweist, in der ein Krallring (22) angeordnet ist, der eine Mehrzahl von radial nach innen ragenden Krallelementen (25) aufweist, mit denen ein in diese Öffnung (5) eingeschobenes Ende eines Rohres (8) fixierbar ist und mit wenigstens einem Dichtungsring (14), der ebenfalls in dieser Öffnung (5) angeordnet ist und mit dem das genannte Ende des Rohres (8) an seinem Umfang (9) gegenüber dem Gehäuse (3) abdichtbar ist, wobei der wenigstens eine Dichtungsring (14) und der Krallring (22) eine vormontierbare Einheit bilden, und wobei zwischen dem Krallring (22) und dem wenigstens einen Dichtungsring (14) ein Haltering (17) angeordnet ist, der den wenigstens einen Dichtungsring (14) mit dem Krallring (22) verbindet, **dadurch gekennzeichnet, dass** der Krallring (22) axial begrenzt verschiebbar am Haltering (17) gelagert ist.

2. Steckmuffe nach Anspruch 1, **dadurch gekennzeichnet, dass** der wenigstens eine Dichtungsring (14), der Haltering (17) und der Krallring (22) zusammengesteckt sind.

3. Steckmuffe nach Anspruch 2, **dadurch gekennzeichnet, dass** der wenigstens eine Dichtungsring (14), der Haltering (17) und der Krallring (22) jeweils mit Rastmitteln (15, 26) miteinander lösbar verbunden sind.

4. Steckmuffe nach einem der Ansprüche 1 bis 3, **dadurch gekennzeichnet, dass** der Krallring (22) an seinem Umfang eine Mehrzahl von Segmenten (23) aufweist, zwischen denen jeweils ein Krallelement (25) gelagert ist.

5. Steckmuffe nach Anspruch 4, **dadurch gekennzeichnet, dass** jeweils benachbarte Segmente (23) mit einem Steg (24) miteinander verbunden sind und dass die Krallelemente (25) jeweils an einem dieser Stege (24) gelagert sind.

6. Steckmuffe nach einem der Ansprüche 1 bis 5, **dadurch gekennzeichnet, dass** die Krallelemente (25) jeweils schwenkbar an einem ringförmigen Träger (27) des Krallringes (22) gelagert sind.

7. Steckmuffe nach einem der Ansprüche 1 bis 6, **dadurch gekennzeichnet, dass** die Krallelemente (25) aufgesteckt sind.

8. Steckmuffe nach einem der Ansprüche 1 bis 7, **dadurch gekennzeichnet, dass** der wenigstens eine Dichtungsring (14) zu seiner Befestigung eine Mehrzahl von gummielastischen Rastnocken (15) aufweist.

9. Steckmuffe nach Anspruch 8, **dadurch gekennzeichnet, dass** die federelastischen Rastnocken (15) den wenigstens einen Dichtungsring (14) mit dem Haltering (17) verbinden.

10. Steckmuffe nach einem der Ansprüche 1 bis 9, **dadurch gekennzeichnet, dass** das Gehäuse (3) in der genannten Öffnung (5) eine im Achsschnitt konische Nut (12) aufweist, in welche die Krallelement (25) beim Einschieben des Rohres (8) eingreifen können.

11. Steckmuffe nach einem der Ansprüche 1 bis 10, **dadurch gekennzeichnet, dass** die genannte Einheit mit einem ringförmigen Haltelement (29) lösbar in der genannten Öffnung (5) gehalten ist.

12. Verbindung zwischen einer Steckmuffe gemäss einem der Ansprüche 1 bis 11 und einem Rohr, **dadurch gekennzeichnet, dass** das in die Steckmuffe (1) eingesetzte Rohr (8) in Einschubrichtung gesehen zuerst den Krallring (22) und dann den wenigstens einen Dichtungsring (14) durchgreift.

13. Verbindung nach Anspruch 12, **dadurch gekennzeichnet, dass** der wenigstens eine Dichtungsring (14) und der Krallring (22) in axialer Richtung gegeneinander gespannt sind, wobei die Spannung durch eine gummielastische Deformation des wenigstens einen Dichtungsringes (14) aufrechterhalten wird.

## Claims

1. A connecting sleeve with a housing (3) which, at least on one end, comprises an opening (5) in which a claw ring (22) is arranged that comprises a plurality of clawing elements (25) protruding radially inwardly, by means of which an end of a tube (8) that is inserted into said opening (5) is fixable and with at least one sealing ring (14), which is also arranged in said opening (5) and by means of which the said end of the tube (8) can be sealed on its circumference (9) against the housing (3), wherein the at least one sealing ring (14) and the claw ring (22) form a unit which can be preassembled, and wherein a retaining ring (17) is arranged between claw ring (22) and the at least one sealing ring (14), which connects the at least one sealing ring (14) with the claw ring (22), **characterized in that** the claw ring (22) is mounted on the retaining ring (17) so as to be axially displaceable to a limited extent.

2. The connecting sleeve according to claim 1, **characterized in that** the at least one sealing ring (14), the retaining ring (17) and the claw ring (22) are plugged together.

3. The connecting sleeve according to claim 2, **characterized in that** the at least one sealing ring (14), the retaining ring (17) and the claw ring (22) are each releasably connected with each other by means of latching means (15, 26).

4. The connecting sleeve according to any one of the preceding claims 1 to 3, **characterized in that** the claw ring (22) comprises on its circumference a plurality of segments (23), between which in each case a clawing element (25) is mounted.

5. The connecting sleeve according to claim 4, **characterized in that** respectively neighboring segments (23) are connected with each other with a web (24) and that the clawing elements (25) are respectively mounted on one of these webs (24).

6. The connecting sleeve according to any one of the preceding claims 1 to 5, **characterized in that** the clawing elements (25) are in each case pivotably mounted on an annular support (27) of the claw ring (22).

7. The connecting sleeve according to any one of the preceding claims 1 to 6, **characterized in that** the clawing elements (25) are plugged on.

8. The connecting sleeve according to any one of the preceding claims 1 to 7, **characterized in that** the at least one sealing ring (14) comprises a plurality of rubber-elastic latching cams (15) for securing the same.

9. The connecting sleeve according to claim 8, **characterized in that** the spring-elastic latching cams (15) connect the at least one sealing ring (14) with the retaining ring (17).

10. The connecting sleeve according to any one of the preceding claims 1 to 9, **characterized in that** the housing (3) comprises in the said opening (5) a conical groove (12) in the axial section, into which the clawing elements (25) can engage upon insertion of the tube (8).

11. The connecting sleeve according to any one of the preceding claims 1 to 10, **characterized in that** the said unit is releasably retained in the said opening (5) by means of an annular retaining element (29).

12. A connection between a connecting sleeve according to any one of the preceding claims 1 to 11 and a tube, **characterized in that** the tube (8) being inserted into the connecting sleeve (1) first passes through the claw ring (22) and then through the at least one sealing ring (14) as seen in the direction of insertion.

13. The connection according to claim 12, **characterized in that** the at least one sealing ring (14) and the claw ring (22) are tensioned with respect to one another as seen in the axial direction, wherein the tension is maintained by means of a rubber-elastic deformation of the at least one sealing ring (14).

## Revendications

1. Manchon emboîtable ayant un boîtier (3) présentant une ouverture (5) au niveau d'au moins une extrémité, dans laquelle un anneau à griffe (22) présentant une pluralité d'éléments à griffe (25) orientés radialement vers l'intérieur est disposé, à l'aide desquels une extrémité d'un tuyau inséré dans cette ouverture (5) peut être fixé, et ayant au moins un anneau d'étanchéité (14), qui est disposé également dans cette ouverture (5) et à l'aide duquel ladite extrémité du tuyau (8) peut être étanchéifiée au niveau de sa circonférence (9) par rapport au boîtier (3), où l'au moins un anneau d'étanchéité (14) et l'anneau à griffes (22) forment une unité pouvant être préassemblée et où un anneau de retenue (18) est disposé entre l'anneau à griffes (22) et l'au moins un anneau d'étanchéité (14), qui connecte l'au moins un anneau d'étanchéité (14) avec l'anneau à griffes (22), **caractérisé en ce que** l'anneau à griffes (22) est monté de sorte à pouvoir coulisser axialement de manière limitée sur l'anneau de retenue (17).

2. Manchon emboîtable selon la revendication 1, **caractérisé en ce que** au moins un anneau d'étanchéité (14), l'anneau de retenue (17) et l'anneau à griffes (22) sont encliquetés.

3. Manchon emboîtable selon la revendication 2, **caractérisé en ce que** l'au moins un anneau d'étanchéité (14), l'anneau de retenue (17) et l'anneau à griffes (22) sont respectivement connectés l'un à l'autre à l'aide de moyens d'encliquetage (15, 26) de manière séparable.

4. Manchon emboîtable selon une des revendications 1 à 3, **caractérisé en ce que** l'anneau à griffes (22) présente sur sa circonférence une pluralité de segments (23), entre lesquels respectivement un élément à griffes (25) est monté.

5. Manchon emboîtable selon la revendication 4, **caractérisé en ce que** respectivement les segments avoisinants (23) sont connectés l'un à l'autre à l'aide d'une nervure (24) et que les éléments à griffes (25) sont respectivement montés sur une de ces nervures (24).

6. Manchon emboîtable selon une des revendications 1 à 5, **caractérisé en ce que** les éléments à griffes sont respectivement montés respectivement de sorte à pouvoir pivoter sur un support annulaire (27) de l'anneau à griffes (22).

7. Manchon emboîtable selon une des revendications 1 à 6, **caractérisé en ce que** les éléments à griffes (25) sont branchés.

8. Manchon emboîtable selon une des revendications 1 à 7, **caractérisé en ce que** l'au moins un anneau d'étanchéité (14) présente une pluralité de tétons d'encliquetage (15) élastiques pour sa fixation.

9. Manchon emboîtable selon la revendication 8, **caractérisé en ce que** les tétons d'encliquetage (15) élastiques connectent l'au moins un anneau d'étanchéité (14) avec l'anneau de retenue (18).

10. Manchon emboîtable selon une des revendications 1 à 9, **caractérisé en ce que** le boitier (3) présente dans l'ouverture (5) une rainure conique (12) en coupe axiale, dans laquelle les éléments à griffes (25) peuvent s'engager l'hors de l'insertion du tuyau (8).

11. Manchon emboîtable selon une des revendications 1 à 10, **caractérisé en ce que** ladite unité avec un élément de retenue annulaire (29) est retenue de manière séparable dans ladite ouverture (5).

12. Raccord entre un manchon emboîtable selon une des revendications 1 à 11 et d'un tuyau, **caractérisé en ce que** le tuyau (8) inséré dans le manchon emboîtable (1), vu en direction d'insertion, traverse d'abord l'anneau à griffes (22) et ensuite l'au moins un anneau d'étanchéité (14).

13. Raccord selon la revendication 12, **caractérisé en ce que** l'au moins un anneau d'étanchéité (14) et l'anneau à griffes (22) sont serrés en direction axiale l'un contre l'autre, où la tension est maintenue par la déformation élastique de l'au moins un anneau d'étanchéité (14).
